(19) Europäisches Patentamt
European Patent Office
Office européen des brevets

(11) Publication number: **0 362 439 A1**

(12) **EUROPEAN PATENT APPLICATION**

(21) Application number: **88201794.0**

(22) Date of filing: **23.08.88**

(51) Int. Cl.5: **C08L 77/00, C08L 71/12, C08F 283/04, C08F 283/08, C08F 279/02**

(43) Date of publication of application: **11.04.90 Bulletin 90/15**

(84) Designated Contracting States: **AT BE CH DE ES FR GB IT LI NL SE**

(71) Applicant: **STAMICARBON B.V.**
**Mijnweg 1**
**NL-6167 AC Geleen(NL)**

(72) Inventor: **Mawatari, Masaaki**
**650-1 Kasado-cho, Suzuka-shi**
**Mieken(JP)**
Inventor: **Kimura, Shinichi**
**12-6, Mitakidai 4-chome**
**Yokkaichi-shi, 510(JP)**
Inventor: **Tsuchikawa, Shuji**
**10-1, Mitakidai 1-chome**
**Yokkaichi-shi Mieken 510(JP)**

(54) **Polyamide-polyphenylene ether mixture.**

(57) The invention relates to a polyamide-polyphenylene ether mixture comprising at least one rubber polymer chosen from copolymers of a conjugate diene monomer and an alkylester of acrylic acid or an alkyl-substituted acrylic acid and rubber-modified styrene based polymers prepared by polymerizing an aromatic vinyl compound and a vinyl cyanide in the presence of an ethylene-α-olefinic based rubber polymer, which rubberpolymer is copolymerized with an unsaturated compound having a functional group and the components of the mixture are meltmixed in the presence of this unsaturated compound having a functional group and a peroxide.

EP 0 362 439 A1

## POLYAMIDE-POLYPHENYLENE ETHER MIXTURE

The invention relates to a polymer mixture comprising a polyamide, a polyphenylene ether, an agent to improve the impact resistance and one or more agents to improve the compatibility of the polyamide, the polyphenylene ether and the agent to improve the impact resistance.

About 100 patent publications excist relating to polyamide-polyphenylene ether mixtures, the agents to improve the compatibility of the two polymers and/or agents to improve the impact resistance of these mixtures.

EP-A-236596 describes a great number of agents to improve the compatibility of the polyamide and the polyphenylene ether. Preferably these agent are chosen from the following groups:

A) liquid diene polymers or epoxy compounds or compounds having in their molecular structure a double or triple carbon-to-carbon bond and a carboxylic acid, acid anhydride, acid amide, imido, carboxylic acid ester, amino or hydroxyl group in a quantity of from 0.01 to 30 parts by weight per 100 parts by weight of polyamide plus polyphenylene ether.

B) a functionalised polyphenylene ether consisting of the reaction product of (a) a polyphenylene ether and (b) a compound of the general formula (i)-Z-(ii), wherein (i) is at least a group of the formula [X-C-(O)] with X = -F, Cl, Br, I, OH, -OR, or -O-C(O)-R with R = H, alkyl or aryl, wherein (ii) is at least a carboxylic acid, acid anhydride, acid amide, imido, carboxylic acid ester, amino or hydroxyl group, and in which the groups (i) and (ii) are covalently bonded together via a bridge Z, Z being a bivalent hydrocarbon radical.

C) a silane compound having in its molecular structure both (a) at least one silicon atom which is bonded to a carbon atom via an oxygen bridge and (b) at least an ethylenic carbon-to-carbon double bond or a carbon-to-carbon triple bond and/or a functional group selected from an amine group and a mercapto group, the functional group not being bonded directly to the silicon atom, in a quantity of from 0.05 to 4 parts by weight of polyamide plus polyphenylene ether.

D) an oxidized polyolefin wax, optionally in combination with an organic phosphite, in a quantity of from 0.01 to 10 parts by weight per 100 parts by weight of polyamide plus polyphenylene ether.

E) a copolymer with units of a vinylaromatic compound and of an alpha-beta unsaturated dicarboxylic acid or dicarboxylic acid anhydride or a copolymer with units of a vinylaromatic compound and of an imide compound of an alpha-beta unsaturated dicarboxylic acid, in a quantity of from 0.5 to 100 parts by weight per 100 parts by weight of polyamide plus polyphenylene ether.

F) the reaction product of a) a 1,2-substituted olefinic compound with carboxyl group or acid anhydride group, b) a polyphenylene ether and c) a radical initiator, in a quantity of from 0.5 to 150 parts by weight per 100 parts by weight of polyamide plus polyphenylene ether.

The agent for improving the compatibility mentioned sub B) or sub F) can replace the polyphenylene ether in the polymer mixtures according to the invention entirely or partly.

As agents to improve the impact resistance olefine based compounds chosen from the following groups are mentioned:

- Ethylene-propylene copolymers or ethylene-propylene non-conjugated diene terpolymers on which a functional group has been grafted, for example carboxylic acid groups or epoxy groups.
- Alkylene-alkyl(meth)acrylate copolymers with an alkylene group having 2-6 carbon atoms and with an alkyl group having 1-8 carbon atoms. Preferred are copolymers of ethylene with an alkylester of acrylic acid.
- Alkylene-alkyl(meth)acrylate polymers with a functional group, which functional group has been introduced by a polymerization reaction while forming a terpolymer or by a grafting reaction. Particularly suitable are ethylene-ethylacrylate-maleic- acid polymers and ethylene-ethylacrylate-fumaric acid polymers.

The use of these olefinic based impact modifiers with one or more of the compatibilisation agents as mentioned under A or B offers distinct advantages i.e. optimal mechanical properties and a good surface appearance.

Upon preparing the above polymer mixtures it has been found that the way of preparing and notably the sequence in which the various constituents are mixed together often is of great importance to obtain optimal properties. For instance it may be advantageous to pre-mix the polyphenylene ether in a separate step with the agent to improve the compatibility, the resulting pre-extrudate is then mixed with the remaining constituents. It is also possible to prepare a pre-mixture of the polyamide or a part of the quantity of the polyamide to be used and the agent to improve the impact resistance. The resulting pre-mixture is then mixed with the remaining constituents. In some cases, polymer mixtures having better properties were obtained when first the polyamide or part of the quantity of polyamide to be used, is mixed in the melt with the agent to improve the impact resistance, the polyphenylene ether or part of the quantity of polyphenylene ether to be used is then mixed with the agent to improve the compatibility in the melt, after which the two resulting pre-mixtures and the constituents possibly not yet incorporated in the premixtures are mixed in the melt.

So essentially a rather laborous and time consuming procedure of

a. modifying the olefinic based compounds to obtain the impact strength improving agent.

b. modifying the polyphenylene ether or producing one of the other compatibility improving agents.

c. producing at least one premixture, preferably two premixtures

d. producing the final mixture. is necessary to obtain mixtures combining good mechanical properties and a good surface appearance.

The object of the present invention is a polyamide-polyphenylene ether mixture comprising an impact resistance improving agent and an agent to improve the compitability of the polyamide and the polyphenylene ether that can be produced in a less complicated manner from its constituents.

The polyamide-polyphenylene ether mixture of the present invention comprising an agent to improve the impact resistance of the mixture, and an agent to improve the compatibility of the polyamide, the polyphenylene ether and the agent to improve the impact resistance is characterized in that it comprises the following melt-mixed components;

a. 4 to 60% by weight of a polyphenylene-ether based resin,

b. 4 to 95% by weight of a polyamide,

c. 1 to 85% by weight of at least one rubber polymer chosen from copolymers of a conjugate diene monomer and an alkylester of acrylic acid or an alkyl substituted acrylic acid and rubber-modified styrene based polymers prepared by polymerizing an aromatic vinyl compound and a vinyl cyanide in the presence of an ethylene-α-olefinic based rubber polymer.

d. optionally a styrene-based polymer in which said compound c. is copolymerized with an unsaturated compound having at least one functional group selected from an acid anhydride, a carboxyl, a hydroxyl, an epoxy, an amino and amide group and said components are melt-mixed in the presence of an unsaturated compound having said functional group and a peroxide.

The composition of the present invention possesses the big advantage that by one single pass through an extruder the polyamide-phenylene ether mixture having good impact strength and surface appearance is obtained.

Polyphenylene ethers are compounds which are known per se. For this purpose reference may be made to the United States Patent Specifications 3.306.874; 3.306.875, 3.257..358. Polyphenylene ethers are usually prepared by an oxidative coupling reaction in the presence of a copper amide complex - of one or more two-fold or three-fold substituted phenols; homopolymers and copolymers, respectively, being obtained. Copper amine complexes derived from primary, secondary and/or tertiary amines may be used

Examples of suitable polyphenylene ethers are:

poly(2,3-dimethyl-6-ethylphenylene-1,4-ether)
poly(2,3,6-trimethylphenylene-1,4-ether)
poly(2-(4′-methylphenyl)phenylene-1,4-ether)
poly(2-bromo-6-phenylphenylene-1,4-ether)
poly(2-methyl-6-phenylphenylene-1,4-ether)
poly(2-chlorophenylele-1,4-ether)
poly(2-chloro-6-ethylphenylene-1,4-ether)
poly(2-chloro-6-bromophenylene-1,4-ether)
poly(2,6-di-n-propylphenylene-1,4-ether)
poly(2-methyl-6-isopropylphenylene-1,4-ether)
poly(2-chloro-6-methylphenylene-1,4-ether)
poly(2-methyl-6-ethylphenylene-1,4-ether)
poly(2,6-dibrromophenylene-1,4-ether)
poly(2,6-dimethylphenylene-1,4-ether)

Copolymers, for example, copolymers derived from two or more phenols as used in the preparation of the above-mentioned homopolymers are also suitable. Furthermore suitable are graft copolymers and block copolymers of vinylaromatic compounds, for example, polystyrene, and of polyphenylene ether as described hereinbefore.

The quantity of polyphenylene ether based resin in the mixture of the present invention is in the range from 4 to 60% by weight, preferably from 5 to 55% more preferably from 10 to 50%. If less than 4% is present the mixture will have insufficient resistance to heat, if more than 60% is present resistance to chemicals, surface appearance and procesability will be insufficient.

All thermoplastics polyamides known per se may be used in the polymer mixtures according to the

invention. Suitable polyamides are, for example, polyamide-4:polyamide-6; polyamide-4,6; polyamide-6,6; polyamide-3,4; polyamide-12; polyamide-11; polyamide-6,10; polyamides prepared from terephtalic acid and 4,4′-diaminocyclohexyl methane, polyamides prepared from azelaic acid, adipic acid and 2,2-bis-(p-aminocyclohexyl)propane, polyamides prepared from adipic acid and metaxylylene diamine, polyamides from terephtalic acid and trimethyl hexamethyl hexamethylene diamine. Particularly suitable are the so called amorphous polyamides, which are well known in the art.

The quantity of polyamide in the mixture of the present invention is in the range of from 4 to 95% by weight, preferably from 30 to 95%, more preferably from 40 to 80%. If the quantity is below 4%, procesability, resistance to chemicals and surface appearance will be insufficient, and resistance to heat and thermal stability will be insufficient if the quantity is more than 95%.

The rubber based polymers of the present invention of component c are:

- a copolymer, of a conjugated diene-based monomer and an alkyl ester of acrylic- or methacrylic acid.

- a rubber modified styrene- based polymer prepared by polymerizing an aromatic vinyl compound and a vinylcyanate in the presence of an ethylene-α-olefine based rubber polymer 2.

Examples of the conjugated diene-based monomer for copolymer 1 include 1,3-butadiene, 2-methyl-1,3-butadiene, 2,3-dimethyl-1,3-butadiene, 2-neopentyl-1,3-butadiene, 2-chloro-1,3-butadiene, 2-cyano-1,3-butadiene, 2-chloro-1,3-butadiene, 2-cyano-1,3-butadiene, substituted, linear-chain, conjugate hexadienes, and straight-chain or side-branched, conjugate hexadienes. Of these, 1,3-butadiene is prefered.

The alkyl esters of acrylic (or methacrylic) acid of copolymer 1 are the compounds with an alkyl group having from 1 to 12 carbon atoms, for instance methyl, ethyl, butyl, hexyl, octyl, 2-ethylhexyl and lauryl esters of acrylic (or methacrylic) acid. They may be used alone or in combination. N-butyl acrylate is preferred. The quantity of the alkyl ester of acrylic (or methacrylic) acid in the rubber polymer is in the range of from 10 to 90% by weight, preferably from 20 to 60%. The mixture will have insufficient thermal stability when the quantity is below 10%, and insufficient resistance to shocks at low temperature when it is above 90%.

Ethylene-α-olefin-based rubber polymers 2 include ethylene-propylene copolymers, ethylene-butene-1 copolymers, ethylene-propylene-nonconjugated diene copolymers, and ethylene-butene-1-nonconjugated diene copolymers. Preferably the propylene content in the above copolymer is in the range of from 20 to 55% by weight; the Mooney viscosity ($ML_1$ + 4, 100¤C) is preferably in the range of from 15 to 50, and the iodine number is preferably in the range of from 0 to 20 to obtain optimal results. The aromatic vinyl compounds and vinylcyanide to be copolymerized in the presence of the rubber polymer 2 are for instance styrene, α-methyl styrene, methyl styrene, vinyl xylene, monochlorostyrene, dichlorostyrene, monobromostyrene, dibromostyrene, p-tert butyl styrene, ethyl styrene, and vinyl naphtalene and acrylonitrile and methacrylonitrile.(They may used alone or in combination). Styrene and acrylonitrile are preferred.

The ratio of the aromatic vinyl compound to the vinyl cyanide is preferably in the range of from 98/2 to 50/50 % by weight, more preferably from 90/10 to 55/45. The thermoplastic resin of the present invention will have insufficient resistance to chemicals and surface appearance, if produced in the absence of the vinyl cyanide.

Other vinyl monomers copolymerizable with the aromatic vinyl compound or the vinyl cyanide are alkyl esters of acrylic (or methacrylic) acid, and maleimide-based compounds.

The maleimide compounds useful for the present invention are maleimide and its derivatives, for instance those substituted with a halogen, alkyl or aryl group. More specifically, they include maleimide, N-methyl maleimide, N-ethyl maleimide, N-butyl maleimide, N-phenyl maleimide, N-p-bromophenyl maleimide, N-o-chlorophenyl maleimide, and N-cyclohexyl maleimide. The particularly preferable maleimide compounds are N-phenyl maleimide, N-o-chlorophenyl maleimide and N-cyclohexyl maleimide.

The content of these copolymerizable vinyl monomers is preferably 50% by weight or less of component (c).

Component (c) of the present invention is modified with a specific functional group, such as acid anhydride, carboxyl, hydroxyl, epoxy and amino group. An unsaturated compound having such a specific functional group may be added to the monomer for copolymerization during the production of component (c), to modify it.

The unsaturated compounds having an acid anhydride group, include maleic acid anhydride, itaconic acid anhydride, chloromaleic acid anhydride, citraconic acid anhydride, butenyl succinic acid anhydride and tetrahydrophtalic acid anyhydride. They may be used alone or in combination. Maleic acid anhydride is preferred.

The unsaturated compounds having a carboxyl group, include acrylic acid, methacrylic acid, crotonoc acid, cinnamic acid, itaconic acid and maleic acid. Acrylic acid and methacrylic acid are preferred. They may be used alone or in combination.

The unsaturated compounds having a hydroxyl group, are those having at least one unsaturated bond (double or tripple bond) and a hydroxyl group. These compounds are represented by alcohols having a double or tripple bond; esters of a mono- or bi-valent unsatureted carboxylic acid and an unsubstituted, bivalent alcohol; esters of the above-mentioned unsaturated carboxylic acid and an unsubstituted, trivalent alcohol; esters of the above-mentioned unsaturated carboxylic acids and an unsubstituted, quad-valent alcohol; and esters of the above-mentioned unsaturated carboxylic acids and an unsubstituted, pentavalent alcohol. More specifically, they include 3-hydroxy-1-propene, 4-hydroxy-1-butene, cis-4-hydroxy-2-butene, trans-4-hydroxy-2-butene, 3-hydroxy-2-methyl-1-propene, cis-5-hydroxy-2-pentene, trans-5-hydroxy-2-pentene, cis-1,4-dihydroxy-2-butene, trans-1,4-dihydroxy-2-butene, 2-hydroxyethyl acrylate, 2-hydroxylethyl methacrilate, 3-hydroxy-propyl acrolate, 3-hydroxypropyle methacrylate, 2-hydroxyethyl crotonate, 2,3,4,5,6-pentahydroxyhexyl acrylate, 2,3,4,5,6-pentahydroxyhexyl methacrylate, 2,3,4,5-tetrahydroxypentyl acrylate, and 2,3,4,5-tetrahydroxypentyl methacrylate. They may be used alone or in combination.

The unsaturated compounds containing epoxy group, are those having an unsaturated group and an epoxy group, copolymerizable with olefin and ethylene type unsaturated compounds. These include unsaturated epoxy compounds, such as glycidyl esters, glycidyl ethers, epoxy alkenes, p-glycidyl styrenes which are represented by the following formula (II), (III) or (IV):

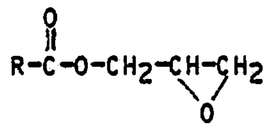

(II)

where, R stands for a hydrocarbon group having an ethylene-type unsaturated bond and from 2 to 18 carbon atoms.

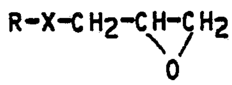

(III)

where, R stand for a hydrocarbon group having an ethylene-type unsaturated bond and from 2 to 18 carbon atoms, and X for $-CH_2O$, or

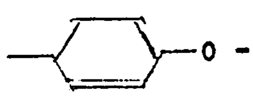

or 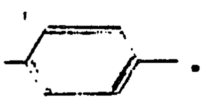 .

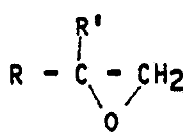

(IV)

where, R stand for a hydrocarbon group having an ethylene-type unsaturated bond and from 2 to 18 carbon atoms, and R′ for hydrogen atom or methyl group.

More specifically, they include glycidyl acrylate, glycidyl methacrylate, itaconic acid glycidyl esters, butenecarboxylic esters, allylglycidyl ethers, styrene-p-glycidyl ethers, 3,4-epoxy butene, 3,4-epoxy-3-methyl-1-butene, 3,4-epoxy-1-pentene, 3,4-epoxy-3-methylpentene, 5,6-epoxy-1-hexene, vinylcyclohexene monoxide and p-glycidyl styrene. They may be used alone or in combination.

The unsaturated compounds having amino group, are vinyl-based monomers having at least one amino or substituted amino group represented by the following general formula:

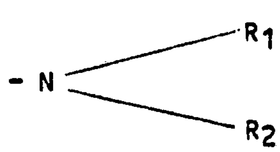

where, $R_1$ stand for hydrogen, methyl or ethyl group; $R_2$ for hydrogen alkyl group having from 1 to 12

carbon atoms, alkanoyl group having from 2 to 12 carbon atoms, phenyl group having from 6 to 12 carbon atoms, cycloalkyl group having from 6 to 12 carbon atoms, or derivatives thereof.

More specifically, they include alkyl ester derivatives of acrylic or methacrylic acid, such as aminoethyl acrylate, propylaminoethyl acrylate, dimethylaminoethyl methacrylate, aminopropyl methacrylate, phenylamino-ethyl methacrylate and cyclohexylaminoethyl methacrylate; vinyl amine type derivatives, such as N-vinyl diethyl amine and N-acetylvinyl amine; allyl amine derivatives, such as allyl amine, methacryl amine and N-methyl-allyl amine; acrylamide derivatives, such as acrylamide and N-methylallyl amide; and p-aminostyrenes, such as p-aminoethylene. Allylamine, amino-ethyl methacrylate, aminopropyl methacrylate and aminostyrenes are more preferable, because they are commercially available commercially. They may be used alone or in combination. Of the above unsaturated compounds having the specific functional group, those having a hydroxyl, amino or epoxy group are preferred. The content of the unsaturated compound having the specific group is preferably in the range of from 0.5 to 20% by weight on the rubber-polymer-free portion of component (c), more preferably from 0.5 to 15%, most preferably from 1 to 15%.

Emulsion, solution, bulk, suspension, bulk-solution and bulk-suspension polymerization processes are useful for production of the component (c) for the present invention. Emulsion polymerization is more preferred, from the standpoint of surface brightness of the formed articles of the composition of the present invention. Any known emulsifier, polymerization initiator, chain transfer agent and polymerization initiator promotor may be used in the emulsion polymerization process. The rubber polymer dispersed in the emulsion-polymerized component (c) has an average particle size preferably in the range of from 1000 to 6000 Å, more preferably from 2000 to 4000 Å.

The content of component (c) in the thermoplastic resin composition (the mixture) of the present invention is in the range of from 1 to 85% by weight, preferably from 5 to 70%, more preferably from 10 to 50%. The composition will have insufficient resistance to shocks and surface appearance when the quantity is below 1%, and insufficient resistance to chemicals and heat when it is above 85%.

It is necessary that component (c) is modified with the above-mentioned specific group, and the components (a), (b), (c) and (d) are melt-mixed in the presence of the unsaturated compound having the specific group and a peroxide, in order to attain the objects of the present invention.

The unsaturated compound to be used during the melt-mixing process has one or more of the groups selected from acid anhydride, carboxyl, hydroxyl, epoxy and amino groups. The one having acid anhydride groups are preferred. The amount of the unsaturated compound is in the range of from 0.001 to 10% by weight on the total amount of the components (a), (b), (c) and (d), preferably from 0.005 to 5%, more preferably from 0.05 to 5%. The thermoplastic resin of the present invention will have insufficient resistance to shocks and heat when the quantity is below 0.001%, and insufficient resistance to shocks and surface appearance when it is above 10%.

Any known peroxide may be used. These include 2,5-dimethyl-2,5-di(ter-butylperoxy)-hexine-3, 2,5-dimethyl-2,5-di(tert-butyl peroxy) hexane, 2,2-bis(tert-butyl peroxy)-p-diisopropylbenzene dicumyl peroxide, di-tert-butyl peroxide, tert-butylperoxybenzoate, 1,1-bis(tert-butylperoxy)-3,3,5-trimethyl cyclohexane, 2,4-dichlorobenzoyl peroxide, benzoyl peroxide, p-chlorobenzoyl peroxide, and azobisisobutylonitrille. Preferred are 2,5-dimethyl-2,5-di(tert-butylperoxy)hexane and 2,5-dimethyl-2,5-di(tert-butylperoxy)hexine-3.

The amount of the above peroxide is in the range of from 0.001 to 5% by weight on the total amount of the components (a), (b), (c) and (d) preferably from 0.005 to 2%, more preferably from 0.005 to 1%. The thermoplastic resin composition of the present invention will have insufficient resistance to shocks and heat when the amount is below 0.001%, and insufficient resistance to shocks and thermal stability when it its above 5%.

The polyphenylene-ether resin component (a) is preferably dispersed in the mixture. The weight-average particle size of the dispersed component (a) is 10 µm or less, preferably 5 µm or less. The mixture will have particularly high resistance to heat, when the particle size is 1 µm or less.

The thermoplastic resin composition of the present invention may be produced by means of different types of extruders, Banbury mixers, kneaders and rollers at a temperature in the range of from 200 to 350¤C. An extruder is preferred, a biaxial extruder is more preferred.

The mixture of the present invention may be produced by blending all the ingredients simultaneously, or by blending them in two or more stages.

Preferred methods are

1. The components (a) en (c), the unsaturated compound, the peroxide and, if required, the ingredient (d) are moulded, to which component (b) is added.

2. The ingredients (a), (b) and (c), the unsaturated compound, the peroxide and, if required, the ingredient (d) are moulded.

When the multi-stage process is used, better results will be obtained by selecting the conditions to

secure more intensive moulding in the second and subsequent stages than in the first stage.

The mixture of the present invention may contain a variety of fillers, such as glass fiber, carbon fiber, metallic fiber, glass beads, glass powder, glass flakes, asbestoes, wollastonit, calcium carbonate, talc, barium sulfate, potassium titanate and mica. These fillers may be used alone or in combination. Glass fiber or carbon fiber, when used as the filler, has a diameter preferably in the range of from 6 to 60µm and a length preferably of 30 µm or longer. The filler content is preferably in the range of from 5 to 150 weight parts per 100 weight parts of the thermoplastic mixture of the present invention. Furthermore, known additives, such as fire retardants, antioxidants, plasticizers, pigments or lubricants may be added to the mixture of the present invention.

The thermoplastic mixture of the present invention may be blended, depending on a specific purpose for which it is used, with another type of polymer, such as polyethylene, polypropylene, polysulfone, polyether sulfone, polyimide, PPS, polyesteretherketone, polyetherketone and PTFE resin.

The thermoplastic resin of the present invention may be processed into articles, by for instance injection molding, sheet extrusion, vacuum forming, profile forming and expansion forming.

The articles of the thermoplastic resin composition of the present invention may be used for various purposes, such as automobile exteriors and interiors, electrical and electronical parts, and housing components.

## EXAMPLES

The present invention will be illustrated in more detail by the following EXAMPLES, but is not limited thereto. Part and % described below mean weight part and weight %.

Polyphenylene ether polymers used in EXAMPLES and COMPARITIVE EXAMPLES were prepared by the following methods:

### 1. POLYMER A-1 (polyphenylene ether)

100 parts of 2,6-xylenol, 0.6 parts of cupric bromide as a catalyst and 12.7 parts of di-n-bytyl amine were polymerized in a toluene solution at 30¤C, while oxygen was blown into the reaction system.
After completing the reaction Polymer A-1 was separated from the polymer containing layer by adding methanol, under vigorous stirring washed with methanol and dried. It has an intrinsic viscosity of 0.40 dl/g as determined out 30¤C in chloroform.

### 2. POLYMER A-2 (polyphenylene ether)

The same procedure used for preparation of POLYMER A-1 was repeated, except that 2,6-xylenol as the phenol compound was replaced by a mixture of 2,6-xylenol/2,3,6-trimethylphenol (90/10 mol/mol), to prepare POLYMER A-2. It has an intrinsic viscosity of 0.4 dl/g.

The rubber polymers, component (c), used in EXAMPLES and COMPARATIVE EXAMPLES were prepared by the following methods:

### 1) Production of RUBBER POLYMER 1

50 parts of n-butyl acrylate, 50 parts of 1,3-butadiene, 0.2 parts of potassium stearate, 1.5 parts of potassium laurate, 0.1 parts of sodium alkylnaphtalenesulfonic acid, 0.1 parts of potassium hydroxyde, 1.5 parts of potassium chloride and 75 parts of deionized water were put in a stainless reactor vessel equipped with a 4-stage paddle blade. The reactor vessel was purged well with nitrogen before it was charged with the reactants. The reactants were heated, while they were stirred at 90 rpm, to 45¤C, at which temperature 0.25 parts of potassium persulfate was added to the reaction system to initiate polymerization.
The temperature was increased to 50¤C 10 hr after the polymerization was initiated, and further to 55¤C 20 hr after the polymerization was initiated. The reaction was allowed to proceed for a total fo 45 hr. The polymerization conversion was 90%.
0.1 parts of diethylhydroxylamine was added to the reaction system, to terminate the polymerization. The reaction product was steam-distilled to remove essentially all of the unreacted monomers, to prepare a latex

of butadiene-n-butyl acrylate.
The rubber polymer had an average particle size of 2800 Å.

2) Production of RUBBER POLYMERS 2 through 5.

RUBBER POLYMERS 2 through 5 were prepared using the procedure similar to that used for preparation of POLYMER 1. The results are given in Table 1.

Table 1

| Rubber Polymer | Butadiene | Alkyl ester of Acrylic (Methacrylic) acid | Average Particle diameter (Å) |
|---|---|---|---|
| 2 | 40 | n-butyl acrylate 60 | 2900 |
| 3 | 70 | n-butyl acrylate 30 | 2800 |
| 4 | 50 | 2-ethylhexyacrylate 50 | 2600 |
| 5 | 100 | -------- | 2800 |

The rubber-modified styrene-based resins, used in EXAMPLES and COMPARITIVE EXAMPLES were prepared by the following methods:

1) Production of POLYMERS C-1 through C-9

40 parts of RUBBER POLYMER 1 latex (as solid), 0.5 parts of sodium dodecyl-benzenesulfonic acid, 110 parts of deionized water, 11.68 parts of styrene, 4.32 parts of acrylonitrile, 4.0 parts of acrylamide and 0.18 parts of tert-dodecylmercaptan were put in a stainless reactor vessel which was purged well with nitrogen before it was charged with the reactants. Hot water (70¤C) was circulated through the heating jacket around the reactor. A solution of 0.2 parts of sodium pyrophosphate, 0.25 parts of fructose and 0.004 parts of ferrous sulfate dissolved in 10 parts of deionized water, and 0.07 parts of cumene hydroperoxide were added to the reactants when the jacket inside was heated to 40¤C. The polymerization reaction was allowed to proceed for 2 hr. Then, an emulsified solution of 23.36 parts of styrene, 8.64 parts of acrylonitrile, 8.0 parts of acrylamide, acrylamide, 0.5 parts of sodium dodecylbenzene-sulfonic acid, 50 parts of deionized water and 0.13 parts of cumene hydroperoxide were added continuously for 4 hr, to continue the polymerization reaction. The polymerization reaction further allowed to proceed for another 1 hr, with a solution of 0.07 parts of sodium pyrophosphate, 0.08 parts of fructose, 0.001 parts of ferrous sulfate and 4 parts of deionized water, and 0.05 parts of cumene hydroperoxide added to the reaction system.
On completing the reaction, the reaction mixture was cooled, and solidified by addition of calcium chloride, an antioxidant, water-washed, dehydrated and dried, to prepare the rubber-modified styrene-based POLYMER C-1 (Table 2). POLYMERS C-2 through C-9 were prepared in a similar manner using the ingredients shown in Table 2.

2) Production of POLYMERS C-10 and C-11

35 parts of EPDM (EP-22, supplied by Japan Synthetic Rubber), 43 parts of styrene, 6 parts of acrylamide, 180 parts of toluene and 0.05 parts of tert-dedocylmercaptan were put in a 50 l, stainless steel autoclave equipped with a ribbon type agitator.
EPDM contained 5-ethylidene-2-Norbonene as a diene component, and had an iodine number of 15 and Mooney viscosity of 42. The reactants were heated, while agitated, to 50¤C, at which 16 parts of acrylonitrile, 0.5 parts of benzoyl peroxide and 0.1 parts of dicumylperoxide were added to the reaction system. They were further heated to 80¤C, and the system was kept at this temperature for polymerization. The reaction system was then heated, 6 hr after the reaction was initiated, to 120¤C in 1 hr, at which the reaction was further allowed to proceed for 2 hr, and stopped. The polymerization conversion was 97%.

The reaction mixture was cooled to 100¤C, 0.2 parts of 2,2-methylene-bis(4-methyl-6-t-butyl phenol) added, and steam-distilled to remove the unreacted monomers and solvents, to prepare POLYMER C-10. The same procedure as used for preparation of POLYMER C-10 was repeated, except that acrylamide was omitted and different propertions were used for EPDM (35 parts), styrene (47 parts) and acrylonitrile (18 parts), to prepare POLYMER C-11.

Table 2

Rubber-modified styrene-based polymers.

| | C-1 | C-2 | C-3 | C-4 | C-5 | C-6 | C-7 | C-8 | C-9 |
|---|---|---|---|---|---|---|---|---|---|
| Batchwise polymerization | | | | | | | | | |
| Rubber polymer types | 1 | 1 | 1 | 1 | 2 | 3 | 4 | 5 | 1 |
| (parts) | 0 | 40 | 40 | 40 | 40 | 40 | 40 | 40 | 40 |
| Styrene (parts) | 1.68 | 13.14 | 14.31 | 11.68 | 11.68 | 11.68 | 11.68 | 11.68 | 14.6 |
| Acrylonitrile (parts) | 4.32 | 4.86 | 5.29 | 4.32 | 4.32 | 4.32 | 4.32 | 4.32 | 5.4 |
| Types of unsaturated compounds having a specific functional group | Acrilamide | Acril-amide | Acril-amide | 2-hydroxy ethyl-methacrylate | Acril-amide | Acril-amide | Acril-amide | Acril-amide | — |
| (parts) | 4.0 | 2.0 | 0.4 | 4.0 | 4.0 | 4.0 | 4.0 | 4.0 | — |
| Incremental polymerization Styrene (parts) | 3.36 | 26.28 | 28.62 | 23.36 | 23.36 | 23.36 | 23.36 | 23.36 | 29.2 |
| Acrylonitrile (parts) | 8.64 | 9.72 | 10.58 | 8.64 | 8.64 | 8.64 | 8.64 | 8.64 | 10.8 |
| Types of unsaturated compounds having a specific functional group | Acrilamide | Acril-amide | Acril amide | 2-hydroxy ethyl methacrylate | Acril-amide | Acril amide | Acril-amide | Acril-amide | — |
| Quantity (parts) | 8.0 | 4.0 | 0.8 | 8.0 | 8.0 | 8.0 | 8.0 | 8.0 | — |

3) Styrene-Based Resin (D-1)

The same reaction conditions and solidification/drying procedure as used for preparation of rubber-modified styrene-based polymer (POLYMER C-8) were repeated, except that the rubber polymer was omitted.

## Polyamide

Nylon 4.6: Produced using the method disclosed in Examined Japanese Patent Publication 60-28843. It had a relative viscosity of 3.5 at 30¤C at a concentration of 1g per 100 ml of 97% sulfuric acid as a solvent.

Nylon 6.6: Amilane CM300 R, supplied by Toray, Japan

Unsaturated Compound Having Specific Functional Group

MHA: Maleic acid anhydride was used.

Peroxide

Kayahexa AD (supplied by Kayaku Nuri Japan) was used.

EXAMPLES 1 through 31, COMPARATIVE EXAMPLES 1 through 11

The above-mentioned polymers were mixed in proportions shown in Table 3. The first-stage ingredients were mixed, to which the second-stage ingredients were added.

Each polymer mixture was pelletized by means of a double screw extruder with split feed, PCM-45 supplied by Ikegaki Tekko, Japan. The extruder is designed in such a way that the feed is moulded more intensively in the section between the first-stage and second-stage feed, and to a still higher degree in the section after the second-stage feed. The highest barrel temperature was set at 310¤C. The polymer mixture was moulded at a screw speed of 300 r.p.m.

The pelletized thermoplastic resin composition was throughly dried, and then injection-molded into the samples. Their properties were determined by the following methods, and the results are given in Table 3.

Analytical Procedure

Impact Resistance

Izod test was performed at 23¤C with a 1/4 inch thick, notched sample, as per ASTM D256.

Thermal Stability

Izod test was performed with the sample which was prepared by means of an injection molding machine whose highest temperature was set at 300¤C, and where the feed was held in the cylinder for 15 min.

Surface appearance of shaped Article

A plate-shape article was produced, and its surface gloss was determined by visual observation. The surface gloss was graded by the following criteria:
0: good
Δ: fair
x: poor.

Resistance to Chemicals

A 1/8 inch thick UL sample was placed in kerosene for 24 hr, while it was strained at 1%, to observe whether it was fractured or not.
o: not fractured
x: fractured

Resistance to Heat (HDT)

The test was performed as per ASTM D648 with a 1/2 inch thick sample under a load of 18.6 $kg/cm^2$.

Moldability

The test was performed as per JIS K7210 under a load of 10 kg to determine MFR, at 280¤C with a nylon 6.6 containing sample and at 300¤C with a nylon 4.6 containing sample.

Results of the COMPARATIVE EXAMPLES:

The composition of COMPARATIVE EXAMPLE-1, wherein the component (c) of the present invention was replaced by polybutadiene, had insufficient thermal stability.

The composition of COMPARATIVE EXAMPLE-2, where the component (a) of the present invention was used outside the range specified for the present invention, had insufficient surface appearance, chemical resistance and processability.

The compositions of COMPARATIVE EXAMPLES 3 and 4, where the unsaturated compound or peroxide was not used, had insufficient impact resistance, chemical and heat resistance, thermal stability and surface appearance.

The composition of COMPARATIVE EXAMPLE-4, where the component (c) of the present invention was not used, has insufficient impact resistance and surface appearance.

The composition of COMPARATIVE EXAMPLE-5, where the component (b) of the present invention alone was used, had insufficient impact resistance and heat resistance.

The composition of COMPARATIVE EXAMPLE-6, where a peroxide was not used, had insufficient impact resistance, chemical and heat resistance, and surface appearance.

The thermoplastic resin composition of the present invention has well balanced properties of impact resistance, chemical and heat resistance, thermal stability, surface appearance and procesability.

Shaped articles obtained from the thermoplastic resin composition of the present invention, having the above-mentioned desired properties, may be used for various purposes, such as automobile exteriors and interiors, electrical and electronic parts and housing components.

## Claims

1. Polyamide-polyphenylene ether mixture comprising an agent to improve the impact resistance and an agent to improve the compatibility of the polyamide, the polyphenylene ether and the agent to improve the impact resistance, characterized in that it comprises the following meltmixed components.

a. 4 to 60% by weight of a polyphenylene ether based resin,

b. 4 to 95% by weight of a polyamide.

c. 1 to 85% by weight of at least one rubber polymer chosen from copolymers of a conjugate diene monomer and an alkylester of acrylic acid or an alkyl-substituted acrylic acid and rubber-modified styrene based polymers prepared by polymerizing an aromatic vinyl compound and a vinyl cyanide in the presence of an ethylene-α-olefinic based rubber polymer.

d. optionally styrene-based polymer

in which said component c is copolymerized with an unsaturated compound having at least one functional group selected from an acid anhydride, a carboxyl, a hydroxyl, an epoxy, an amino and an amide group, and said components are melt-mixed in the presence of an unsaturated compound having said functional group and a peroxide.

2. Polyamide-polyphenylene ether mixture according to claim 1, characterized in that, it comprises from 5 to 55% by weight polyphenylene ether.

3. Polyamide-polyphenylene ether mixture according to claim 2, characterized in that it comprises from 10 to 50% by weight polyphenylene ether.

4. Polyamide-polyphenylene ether mixture according to claim 1, characterized in that it comprises 30 to 95% by weight polyamide.

5. Polyamide-polyphenylene ether mixture according to claim 4, characterized in that it comprises 40 to 80% by weight polyamide.

6. Polyamide-polyphenylene ether mixture according to claim 1, characterized in that it comprises polyamide 6.6 or polyamide 4.6.

7. Polyamide-polyphenylene ether mixture according to claim 1, charac terized in that the copolymer of a conjugate diene monomer and an alkyl ester of acrylic acid or an alkyl-substituted acrylic acid is a copolymer of 1,3 butadiene and N-butylacrylate.

8. Polyamide-polyphenylene ether mixture according to claim 1, characterized in that the alkyl ester of acrylic acid or an alkyl-substituted acrylic acid content of the copolymer with the conjugate diene monomer is in the range of 10 to 90% by weight.

9. Polyamide-polyphenylene ether mixture according to claim 8, characterized in that the content is in the range of 20 to 60% by weight.

10. Polyamide-polyphenylene ether mixture according to claim 1 characterized in that the rubber-modified styrene based polymer prepared by polymerizing an aromatic vinyl compound and a vinyl cyanide in the presence of an ethylene-α-olefinic based rubber polymer contains styrene and acrylonitril in a ratio in the range of 98/2 to 50/50 by weight.

11. Polyamide-polyphenylene ether mixture according to claim 10, characterized in that the styrene/acrylonitril ratio is in the range of 90/10 to 55/45 by weight.

12. Polyamide-polyphenylene ether mixture according to claim 1 characterized in that the unsaturated compound having a functional group is chosen from maleic acid anhydride, acrylic acid, methacrylic acid and alkylesters thereof, glycidyl acrylates, aminoacrylates and acrylamides and is present in the range of 0.5 to 20% by weight of the rubber polymer-free portion of component c.

13. Polyamide-polyphenylene ether mixture according to claim 12 characterized in that the unsaturated compound having a functional group is present in the range of 5 to 70% by weight of the rubber polymer-free portion of component c.

14. Polyamide-polyphenylene ether mixture according to claim 1 characterized in that it comprises 5 to 70% by weight of component c.

15. Polyamide-polyphenylene ether mixture according to claim 14 characterized in that it comprises 10 to 50% by weight of component c.

16. Polyamide-polyphenylene ether mixture according to claim 1 characterized in that the unsaturated compound to be used during melt-mixing is present in 0.001 to 10% by weight of the total amount of components a, b, c and d, preferably 0.005 to 5% more preferably 0.01 to 5%.

17. Polyamide-polyphenylene ether mixture according to claim 1 characterized in that the peroxide is present in the range of from 0.001 to 5% by weight of the total amount of the components a, b, c and d, preferably from 0.005 to 2%, more preferably from 0.005 to 1%.

18. Process for the production of the mixture according to any one of the claims 1-17, by melt mixing the component a, b, c and if required, d, characterized in that the components a, b, c and, if required d, are meltmixing in the presence of an unsaturated compound having at least one functional group selected from an acid anhydride, a carboxyl, a hydroxyl, an epoxy, an amino and an amide group and a peroxide.

19. Process for the production of the mixture according to claim 18, characterized in that in a first stage component a, c and if required d are meltmixed and component b is added thereafter.

AE 6159

TABLE 3

| | | COMPOSITION | | | | | | | | | RESULTS | | | | | |
|---|---|---|---|---|---|---|---|---|---|---|---|---|---|---|---|---|
| | | 1ST STAGE | | | | | | 2ND STAGE | | | impact resistance (kgcm/cm) | heat stability (kgcm/cm) | molded sample surface gloss | solvent resistance | heat resistance (C°) | molded processability (g/10 min) |
| | | (a) content | (b) content | (c) content | (d) content | unsaturated compound content | peroxide content | (b) content | unsaturated compound content | peroxide content | | | | | | |
| EXAMPLE | 1 | A-1 33.8 | — | C-1 25 | — | 0.34 | 0.09 | nylon 6.6 41.2 | 0.34 | 0.09 | 16 | 12 | ○ | ○ | 120 | 112 |
| | 2 | A-2 33.8 | — | C-1 25 | — | 0.34 | 0.09 | 〃 6.6 41.2 | 0.34 | 0.09 | 18 | 14 | ○ | ○ | 124 | 116 |
| | 3 | A-2 33.8 | — | C-1 25 | — | 0.34 | 0.09 | 〃 4.6 41.2 | 0.34 | 0.09 | 20 | 16 | ○ | ○ | 148 | 132 |
| | 4 | A-2 40.0 | — | C-1 20 | — | 0.40 | 0.10 | 〃 6.6 40.0 | 0.40 | 0.10 | 18 | 14 | ○ | ○ | 129 | 87 |
| | 5 | A-2 20.0 | — | C-1 20 | 15.5 | 0.20 | 0.05 | 〃 6.6 44.5 | 0.20 | 0.05 | 14 | 11 | ○ | ○ | 107 | 145 |
| | 6 | A-2 33.8 | nylon 6.6 41.2 | C-1 25 | — | 0.68 | 0.18 | — | — | — | 12 | 9 | ○ | ○ | 118 | 129 |
| | 7 | A-2 33.8 | — | C-1 25 | — | 0.34 | 0.09 | 〃 6.6 41.2 | — | — | 18 | 14 | ○ | ○ | 122 | 112 |
| | 8 | A-2 20.0 | — | C-1 20 | — | 0.20 | 0.05 | 〃 6.6 60.0 | 0.20 | 0.05 | 22 | 18 | ○ | ○ | 116 | 138 |
| | 9 | A-2 33.8 | — | C-2 25 | — | 0.34 | 0.09 | 〃 6.6 41.2 | 0.34 | 0.09 | 18 | 14 | ○ | ○ | 124 | 117 |
| | 10 | A-2 33.8 | — | C-3 25 | — | 0.34 | 0.09 | 〃 6.6 41.2 | 0.34 | 0.09 | 16 | 12 | ○ | ○ | 122 | 121 |
| | 11 | A-2 33.8 | — | C-4 25 | — | 0.34 | 0.09 | 〃 6.6 41.2 | 0.34 | 0.09 | 20 | 15 | ○ | ○ | 124 | 116 |
| | 12 | A-2 33.8 | — | C-5 25 | — | 0.34 | 0.09 | 〃 6.6 41.2 | 0.34 | 0.09 | 18 | 14 | ○ | ○ | 124 | 116 |
| | 13 | A-2 33.8 | — | C-6 25 | — | 0.34 | 0.09 | 〃 6.6 41.2 | 0.34 | 0.09 | 18 | 14 | ○ | ○ | 124 | 116 |
| | 14 | A-2 33.8 | — | C-7 25 | — | 0.34 | 0.09 | 〃 6.6 41.2 | 0.34 | 0.09 | 18 | 14 | ○ | ○ | 124 | 116 |
| | 15 | A-2 33.8 | — | C-9 25 | — | 0.34 | 0.09 | 〃 6.6 41.2 | 0.34 | 0.09 | 14 | 9 | ○ | ○ | 121 | 124 |
| | 16 | A-2 33.8 | — | C-10 25 | — | 0.34 | 0.09 | 〃 6.6 41.2 | 0.34 | 0.09 | 17 | 17 | ○ | ○ | 124 | 116 |
| | 17 | A-2 33.8 | — | C-11 25 | — | 0.34 | 0.09 | 〃 6.6 41.2 | 0.34 | 0.09 | 14 | 13 | ○~△ | ○ | 123 | 120 |
| | 18 | A-2 33.8 | — | C-1 25 | — | 0.34*1 | 0.09 | 〃 6.6 41.2 | 0.34*1 | 0.09 | 16 | 10 | ○ | ○ | 126 | 112 |
| | 19 | A-2 33.8 | — | C-1 25 | — | 0.34*2 | 0.09 | 〃 6.6 41.2 | 0.34*2 | 0.09 | 18 | 13 | ○ | ○ | 124 | 115 |
| | 20 | A-2 33.8 | — | C-1 25 | — | 0.34*3 | 0.09 | 〃 6.6 41.2 | 0.34*3 | 0.09 | 18 | 12 | ○ | ○ | 127 | 110 |
| | 21 | A-2 33.8 | — | C-1 25 | — | 0.34*4 | 0.09 | 〃 6.6 41.2 | 0.34*4 | 0.09 | 18 | 10 | ○ | ○ | 122 | 116 |
| | 22 | A-2 33.8 | — | C-1 25 | — | 0.34*5 | 0.09 | 〃 6.6 41.2 | 0.34*5 | 0.09 | 18 | 13 | ○ | ○ | 122 | 116 |
| | 23 | A-2 33.8 | — | C-9 25 | — | 0.34*1 | 0.09 | 〃 6.6 41.2 | 0.34*1 | 0.09 | 13 | 9 | ○ | ○ | 123 | 122 |
| | 24 | A-2 33.8 | — | C-9 25 | — | 0.34*2 | 0.09 | 〃 6.6 41.2 | 0.34*2 | 0.09 | 14 | 8 | ○ | ○ | 121 | 126 |
| | 25 | A-2 33.8 | — | C-9 25 | — | 0.34*3 | 0.09 | 〃 6.6 41.2 | 0.34*3 | 0.09 | 14 | 8 | ○ | ○ | 124 | 120 |
| | 26 | A-2 33.8 | — | C-9 25 | — | 0.34*4 | 0.09 | 〃 6.6 41.2 | 0.34*4 | 0.09 | 14 | 7 | ○ | ○ | 119 | 125 |
| | 27 | A-2 33.8 | — | C-9 25 | — | 0.34*5 | 0.09 | 〃 6.6 41.2 | 0.34*5 | 0.09 | 14 | 9 | ○ | ○ | 121 | 124 |
| | 28 | A-2 33.8 | — | C-1 25 | — | 1.0 | 0.09 | 〃 6.6 41.2 | 1.0 | 0.09 | 17 | 13 | ○ | ○ | 124 | 113 |
| | 29 | A-2 33.8 | — | C-1 25 | — | 0.05 | 0.09 | 〃 4.6 41.2 | 0.05 | 0.09 | 16 | 12 | ○ | ○ | 122 | 118 |
| | 30 | A-2 33.8 | — | C-1 25 | — | 0.34 | 0.5 | 〃 6.6 41.2 | 0.34 | 0.5 | 18 | 14 | ○ | ○ | 124 | 116 |
| | 31 | A-2 33.8 | — | C-1 25 | — | 0.34 | 0.01 | 〃 4.6 41.2 | 0.34 | 0.01 | 17 | 13 | ○ | ○ | 123 | 118 |
| COMPARATIVE EXAMPLE | 1 | A-2 33.8 | — | C-8 25 | — | 0.34 | 0.09 | nylon 6.6 41.2 | 0.34 | 0.09 | 16 | 2 | ○ | ○ | 124 | 116 |
| | 2 | A-2 70 | — | C-1 25 | — | 0.34 | 0.09 | 〃 6.6 5 | 0.34 | 0.09 | 17 | 11 | × | × | 152 | 16 |
| | 3 | A-2 33.8 | — | C-9 25 | — | — | — | 〃 6.6 41.2 | — | — | 5 | 2 | × | × | 102 | 142 |
| | 4 | A-2 45 | — | — | — | 0.34 | 0.09 | 〃 6.6 41.2 | 0.34 | 0.09 | 3 | 2 | × | ○ | 155 | 128 |
| | 5 | — | nylon 6.6 100 | — | — | — | — | — | — | — | 5 | 3 | ○ | ○ | 77 | 320 |
| | 6 | A-2 33.8 | — | C-9 25 | — | 0.34 | — | 〃 6.6 41.2 | 0.34 | — | 6 | 3 | △ | × | 102 | 138 |
| | 7 | A-2 33.8 | — | C-11 25 | — | — | — | 〃 6.6 41.2 | — | — | 5 | 2 | × | × | 100 | 120 |
| | 8 | A-2 33.8 | — | C-1 25 | — | 7.5 | 0.09 | 〃 6.6 41.2 | 7.5 | 0.09 | 10 | 7 | △ | ○ | 122 | 98 |
| | 9 | A-2 33.8 | — | C-1 25 | — | — | 0.09 | 〃 6.6 41.2 | — | 0.09 | 6 | 4 | × | × | 108 | 132 |
| | 10 | A-2 33.8 | — | C-1 25 | — | 0.34 | — | 〃 6.6 41.2 | 0.34 | — | 13 | 7 | × | △ | 110 | 127 |
| | 11 | A-2 33.8 | — | C-1 25 | — | 0.34 | 3.5 | 〃 6.6 41.2 | 0.34 | 3.5 | 9 | 3 | △ | △ | 122 | 117 |

*1: acrylic acid  *2: hydroxy ethyl methacrylate  *3: glycidyl methacrylate  *4: amino acrylate  *5: acrylamide

European Patent Office

# EUROPEAN SEARCH REPORT

Application Number

EP 88 20 1794

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 244 090 (JAPAN SYNTHETIC RUBBER)<br>* Claim 1 * | 1 | C 08 L 77/00<br>C 08 L 71/12<br>C 08 F 283/04<br>C 08 F 283/08<br>C 08 F 279/02 |
| A | * Claims 2-24 *<br>--- | 2-19 | |
| A | EP-A-0 248 526 (MITSUBISHI PETROCHEMICAL CO.)<br>* Claims 1-10 *<br>--- | 1-19 | |
| A,D | EP-A-0 236 596 (GENERAL ELECTRIC CO.)<br>* Claims 1-14 *<br>----- | 1-19 | |
| | | | **TECHNICAL FIELDS SEARCHED (Int. Cl.5)** |
| | | | C 08 L<br>C 08 F |

The present search report has been drawn up for all claims

| Place of search | Date of completion of the search | Examiner |
|---|---|---|
| THE HAGUE | 12-04-1989 | GLANDDIER A. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)